(19)

Europäisches Patentamt
European Patent Office
Office européen des brevets

(11) **EP 4 248 397 B1**

(12) **EUROPEAN PATENT SPECIFICATION**

(45) Date of publication and mention
of the grant of the patent:
**19.03.2025 Bulletin 2025/12**

(21) Application number: **22702113.6**

(22) Date of filing: **13.01.2022**

(51) International Patent Classification (IPC):
**G06T 5/50** *(2006.01)*     **G06T 5/60** *(2024.01)*
**G06T 5/77** *(2024.01)*

(52) Cooperative Patent Classification (CPC):
**G06T 5/77; G06T 5/50; G06T 5/60;**
G06T 2207/10004; G06T 2207/20081;
G06T 2207/20084; G06T 2207/20221

(86) International application number:
**PCT/US2022/012222**

(87) International publication number:
**WO 2023/136822 (20.07.2023 Gazette 2023/29)**

(54) **MACHINE LEARNING MODELS FOR EXAMPLE-GUIDED IMAGE INPAINTING**

MODELLE DES MASCHINELLEN LERNENS FÜR BEISPIELGELEITETE BILD-INPAINTING

MODÈLES D'APPRENTISSAGE MACHINE POUR L'INPAINTING D'IMAGES GUIDÉ PAR
L'EXEMPLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.09.2023 Bulletin 2023/39**

(73) Proprietor: **Google LLC**
**Mountain View, CA 94043 (US)**

(72) Inventors:
• **LIBA, Orly**
**Mountain View, CA 94043 (US)**
• **ABERMAN, Kfir**
**Mountain View, CA 94043 (US)**
• **XIONG, Wei**
**Mountain View, CA 94043 (US)**
• **FUTSCHIK, David**
**Mountain View, CA 94043 (US)**
• **KNAAN, Yael, Pritch**
**Mountain View, CA 94043 (US)**
• **SYKORA, Daniel**
**Mountain View, CA 94043 (US)**
• **XUE, Tianfan**
**Mountain View, CA 94043 (US)**

(74) Representative: **Marks & Clerk GST**
**1 New York Street**
**Manchester M1 4HD (GB)**

(56) References cited:
• **LI JIA ET AL: "FaceInpainter: High Fidelity Face
Adaptation to Heterogeneous Domains", 2021
IEEE/CVF CONFERENCE ON COMPUTER VISION
AND PATTERN RECOGNITION (CVPR), IEEE, 20
June 2021 (2021-06-20), pages 5085 - 5094,
XP034008398, DOI: 10.1109/
CVPR46437.2021.00505**
• **NGÔ LÊ MINH ET AL: "Unified Application of
Style Transfer for Face Swapping and
Reenactment", COMPUTER VISION - ACCV 2020
15TH ASIAN CONFERENCE ON COMPUTER
VISION, 30 November 2020 (2020-11-30) - 4
December 2020 (2020-12-04), Lecture Notes in
Computer Science (LNCS 12626), XP047577986,
ISBN: 978-3-030-69541-5, DOI: 10.1007/
978-3-030-69541-5_15**
• **ZHU YUHAO ET AL: "One Shot Face Swapping
on Megapixels", 2021 IEEE/CVF CONFERENCE
ON COMPUTER VISION AND PATTERN
RECOGNITION (CVPR), IEEE, 20 June 2021
(2021-06-20), pages 4832 - 4842, XP034007922,
DOI: 10.1109/CVPR46437.2021.00480**

**(Cont. next page)**

- **RAMEEN ABDAL ET AL: "Image2StyleGAN++: How to Edit the Embedded Images?", ARXIV.ORG, CORNELL UNIVERSITY LIBRARY, 201 OLIN LIBRARY CORNELL UNIVERSITY ITHACA, NY 14853, 7 August 2020 (2020-08-07), XP081735267**

**Description**

## BACKGROUND

In-filling of input data, such as an image, involves replacing damaged, deteriorated, removed, undesirable, and/or otherwise missing portions of the input data to thereby generate in-filled output data. The replaced portions may be based on the remaining portions of the input data, and may thus be consistent with the remaining portions such that the resulting in-filled output data appears natural, non-synthetic, and/or as having an otherwise desirable quality. Various machine learning models, algorithms, and/or architectures may be configured to facilitate in-filling of input data. In some cases, the missing portions of the input data may be sufficiently large and/or complex such that the remaining portions of the input data may be insufficient to generate in-filled output data of sufficient quality. LI JIA ET AL: "FaceInpainter: High Fidelity Face Adaptation to Heterogeneous Domains" describes a novel two-stage framework named FaceInpainter to implement controllable Identity-Guided Face Inpainting (IGFI) under heterogeneous domains. NGO LE MINH ET AL: "Unified Application of Style Transfer for Face Swapping and Reenactment" describes a unified end-to-end pipeline for face swapping and reenactment.

## SUMMARY

The invention is set out in the appended set of claims.

An inpainting system is configured to inpaint a missing region of an input image based on a guide image. The input image and the guide image may be different images, and the guide image may thus provide new and controllable image content for guiding the inpainting of the missing region. The inpainting system includes one or more encoders configured to generate a first latent representation of the input image and a second latent representation of the guide image. The first and second latent representations are combined to generate a combined latent representation by, for example, concatenating the first and second latent representations and/or determining a cross-attention therebetween. The inpainting system also includes a style generative adversarial network (StyleGAN) configured to generate an intermediate output image based on the combined latent representation. In particular, the StyleGAN may be arranged and trained such that the intermediate output image includes inpainted image content for the missing region of the input image, and the inpainted image content may include a combination of visual features of the guide image and the input image. The inpainting system is configured to generate an output image by replacing the missing region of the input image with the inpainted image content.

In a first embodiment according to the invention, a method as defined in claim 1 is provided.

In a second embodiment according to the invention, a system as defined in claim 14 is provided.

In a third embodiment according to the invention, a non-transitory computer-readable medium as defined in claim 15 is provided.

In a fourth example embodiment, a system may include various means for carrying out each of the operations of the first embodiment according to the invention.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, that numerous variations are possible.

## BRIEF DESCRIPTION OF THE DRAWINGS

Figure 1 illustrates a computing device, in accordance with examples described herein.
Figure 2 illustrates a computing system, in accordance with examples described herein.
Figure 3 illustrates an inpainting system, in accordance with examples described herein.
Figures 4A, 4B, and 4C illustrate architectures of a StyleGAN model, in accordance with examples described herein.
Figure 5 illustrates a training system, in accordance with examples described herein.
Figure 6 shows example images, in accordance with examples described herein.
Figure 7 illustrates a flow chart, in accordance with examples described herein.

## DETAILED DESCRIPTION

Example methods, devices, and systems are described herein. It should be understood that the words "example" and "exemplary" are used herein to mean "serving as an example, instance, or illustration." Any embodiment or feature described herein as being an "example," "exemplary," and/or "illustrative" is not necessarily to be construed as preferred or advantageous over other embodiments or features unless stated as such.

Further, unless context suggests otherwise, the features illustrated in each of the figures may be used in combination with one another. Thus, the figures should be generally viewed as component aspects of one or more overall embodiments, with the understanding that not all illustrated features are necessary for each embodiment.

## I. Overview

Image inpainting may involve generating image content for a missing region (i.e., a region to be inpainted) of an incomplete image based on image content of remaining regions of the incomplete image. However, inpainting performance may be poor when, for example, the missing region is relatively large in relation to the incomplete image and/or parts of the incomplete image include complex patterns. For example, inpainted image content for relatively large missing regions may include undesirable artifacts such as tessellations. Additionally, inpainting the missing region based on the image content of the remaining regions of the incomplete image might not allow for control of the content and/or style of the generated image content. Specifically, it may be difficult to control the extent to which different portions of the remaining regions of the incomplete image influence the inpainted image content, and/or to introduce new content from another image into the inpainted region.

Accordingly, an inpainting system may be configured to use a guide image to assist with the inpainting of a missing region of an input image. The inpainting system may be configured to combine visual features of the guide image with visual features of the remaining regions of the input image. Thus, the inpainting system may be configured to generate inpainted image content that blends visual features of both the guide image and the input image in a manner that is visually-plausible, coherent, realistic, natural, and/or otherwise visually desirable. For example, the inpainted image content may be based on, and thus visually resemble, a color palette of the guide image, geometric features present in the guide image, a frequency content of the guide image, statistical properties of the guide image, and/or a semantic content of the guide image, among other visual features, properties, and/or attributes of the guide image. Thus, the inpainting system may use the guide image to (i) control the visual appearance of the inpainted image content and (ii) provide additional image data beyond that available in the remaining portions of the input image, thereby improving the quality of the inpainted image content. The inpainting system may, therefore, allow effective inpainting of regions that were not previously possible to effectively inpaint.

The inpainting system may include one or more encoders, a latent representation operator, a StyleGAN model, and an output image generator. The one or more encoders may be configured to generate a first latent representation of the input image and a second latent representation of the guide image. The latent representation may include, for example, a vector and/or a feature map, among other possibilities. The latent representation operator may be configured to determine a combined latent representation of the input and guide images by, for example, concatenating the first and second latent representations and/or by determining a cross-attention therebetween.

The combined latent representation may be provided as input to a StyleGAN model, which may be configured to generate an intermediate output image that includes generated image content for the missing region of the input image. Components of the StyleGAN model may be arranged to allow the StyleGAN to inpaint the missing region of the input image by combining the visual features of the input image and the guide image, as represented by the combined latent representation. In particular, the StyleGAN model may be configured to perform at least part of the combination of the visual features in a deep latent and/or feature space, rather than in pixel space, thereby improving the quality of the inpainted image content. The output image generator may be configured to generate an output image by combining the inpainted image content of the intermediate output image with the input image according to an indication of the region to be inpainted (e.g., an inpainting mask) that indicates the missing region of the input image.

The inpainted image content for a given input image may be controlled by selecting a guide image that has a target set of visual features. Thus, for example, a user may be able to cause the inpainting model to generate inpainted image content with a desired visual appearance by providing the inpainting model with a guide image that has and/or approximates the desired visual appearance. In another example, a guide image may be selected from a plurality of candidate guide images based on a similarity between the input image and each of the plurality of guide images. For example, a guide image that is most similar to the input image may be selected, and the resulting inpainted image content may thus visually match the remaining parts of the input image more accurately than if a dissimilar guide image were used instead. Further, multiple different output images may be generated based on the given input image by inpainting the missing region based on multiple different guide images, each of which may include a different set of visual features.

## II. **Example Computing Devices and Systems**

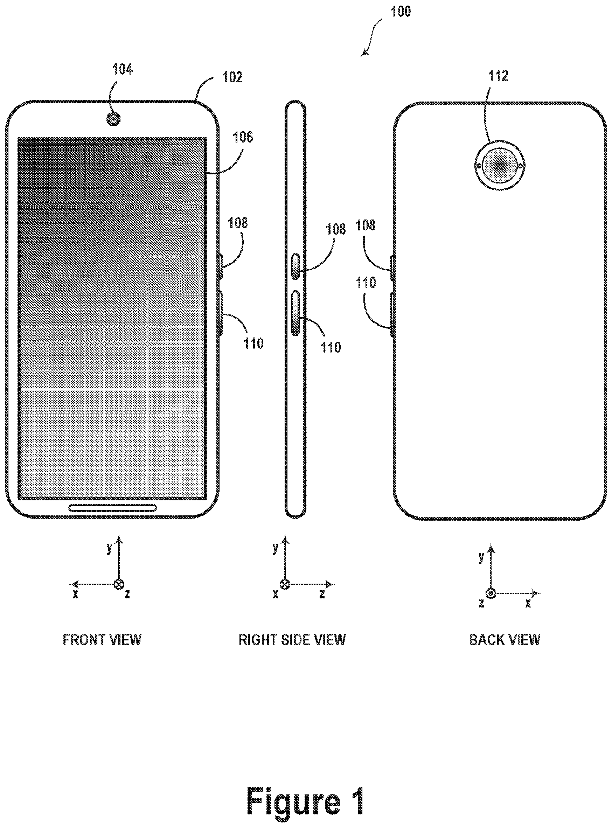

Figure 1 illustrates an example computing device 100. Computing device 100 is shown in the form factor of a mobile phone. However, computing device 100 may be alternatively implemented as a laptop computer, a tablet computer, and/or a wearable computing device, among other possibilities. Computing device 100 may include various elements, such as body 102, display 106, and buttons 108 and 110. Computing device 100 may further include one or more cameras, such as front-facing camera 104 and rear-facing camera 112.

Front-facing camera 104 may be positioned on a side of body 102 typically facing a user while in operation (e.g., on the same side as display 106). Rear-facing camera 112 may be positioned on a side of body 102 opposite front-facing camera 104. Referring to the cameras as front and rear facing is arbitrary, and computing device 100 may include multiple cameras positioned on various sides of body 102.

Display 106 could represent a cathode ray tube (CRT) display, a light emitting diode (LED) display, a liquid crystal (LCD) display, a plasma display, an organic light emitting diode (OLED) display, or any other type of display known in the art. In some examples, display 106 may display a digital representation of the current image being captured by front-facing camera 104 and/or rear-facing camera 112, an image that could be captured by one or more of these cameras, an image that was recently captured by one or more of these cameras, and/or a modified version of one or more of these images. Thus, display 106 may serve as a viewfinder for the cameras. Display 106 may also support touchscreen functions that may be able to adjust the settings and/or configuration of one or more aspects of computing device 100.

Front-facing camera 104 may include an image sensor and associated optical elements such as lenses. Front-facing camera 104 may offer zoom capabilities or could have a fixed focal length. In other examples, interchangeable lenses could be used with front-facing camera 104. Front-facing camera 104 may have a variable mechanical aperture and a mechanical and/or electronic shutter. Front-facing camera 104 also could be configured to capture still images, video images, or both. Further, front-facing camera 104 could represent, for example, a monoscopic, stereoscopic, or multiscopic camera. Rear-facing camera 112 may be similarly or differently arranged. Additionally, one or more of front-facing camera 104 and/or rear-facing camera 112 may be an array of one or more cameras.

One or more of front-facing camera 104 and/or rear-facing camera 112 may include or be associated with an illumination component that provides a light field to illuminate a target object. For instance, an illumination component could provide flash or constant illumination of the target object. An illumination component could also be configured to provide a light field that includes one or more of structured light, polarized light, and light with specific spectral content. Other types of light fields known and used to recover three-dimensional (3D) models from an object are possible within the context of the examples herein.

Computing device 100 may also include an ambient light sensor that may continuously or from time to time determine the ambient brightness of a scene that cameras 104 and/or 112 can capture. In some implementations, the ambient light sensor can be used to adjust the display brightness of display 106. Additionally, the ambient light sensor may be used to determine an exposure length of one or more of cameras 104 or 112, or to help in this determination.

Computing device 100 could be configured to use display 106 and front-facing camera 104 and/or rear-facing camera 112 to capture images of a target object. The captured images could be a plurality of still images or a video stream. The image capture could be triggered by activating button 108, pressing a softkey on display 106, or by some other mechanism. Depending upon the implementation, the images could be captured automatically at a specific time interval, for example, upon pressing button 108, upon appropriate lighting conditions of the target object, upon moving computing device 100 a predetermined distance, or according to a predetermined capture schedule.

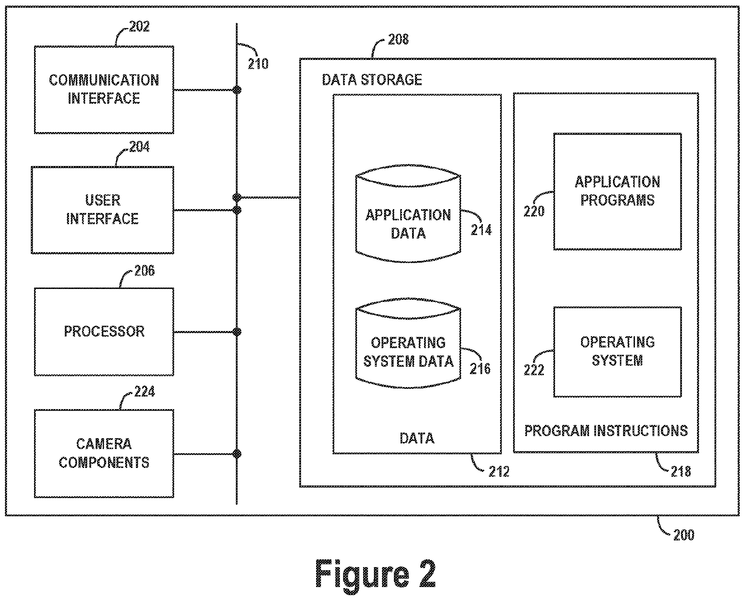

Figure 2 is a simplified block diagram showing some of the components of an example computing system 200. By way of example and without limitation, computing system 200 may be a cellular mobile telephone (e.g., a smartphone), a computer (such as a desktop, notebook, tablet, server, or handheld computer), a home automation component, a digital video recorder (DVR), a digital television, a remote control, a wearable computing device, a gaming console, a robotic device, a vehicle, or some other type of device. Computing system 200 may represent, for example, aspects of computing device 100.

As shown in Figure 2, computing system 200 may include communication interface 202, user interface 204, processor 206, data storage 208, and camera components 224, all of which may be communicatively linked together by a system bus, network, or other connection mechanism 210. Computing system 200 may be equipped with at least some image capture and/or image processing capabilities. It should be understood that computing system 200 may represent a physical image processing system, a particular physical hardware platform on which an image sensing and/or processing application operates in software, or other combinations of hardware and software that are configured to carry out image capture and/or processing functions.

Communication interface 202 may allow computing system 200 to communicate, using analog or digital modulation, with other devices, access networks, and/or transport networks. Thus, communication interface 202 may facilitate circuit-switched and/or packet-switched communication, such as plain old telephone service (POTS) communication and/or Internet protocol (IP) or other packetized communication. For instance, communication interface 202 may include a chipset and antenna arranged for wireless communication with a radio access network or an access point. Also, communication interface 202 may take the form of or include a wireline interface, such as an Ethernet, Universal Serial Bus (USB), or High-Definition Multimedia Interface (HDMI) port, among other possibilities. Communication interface 202 may also take the form of or include a wireless interface, such as a Wi-Fi, BLUETOOTH®, global positioning system (GPS), or wide-area wireless interface (e.g., WiMAX or 3GPP Long-Term Evolution (LTE)), among other possibilities. However, other forms of physical layer interfaces and other types of standard or proprietary communication protocols may be used over communication interface 202. Furthermore, communication interface 202 may comprise multiple physical communication interfaces (e.g., a Wi-Fi interface, a BLUETOOTH® interface, and a wide-area wireless interface).

User interface 204 may function to allow computing system 200 to interact with a human or non-human user, such as to receive input from a user and to provide output to the user. Thus, user interface 204 may include input components such as a keypad, keyboard, touch-sensitive panel, computer mouse, trackball, joystick, microphone, and so on. User interface 204 may also include one or more output components such as a display screen, which, for example, may be combined with a touch-sensitive panel. The display screen may be based on CRT, LCD, LED, and/or OLED technologies, or other technologies now known or later developed. User interface 204 may also be configured to generate audible output(s), via a speaker, speaker jack, audio output port, audio output device, earphones, and/or other similar devices. User interface 204 may also be configured to receive and/or capture audible utterance(s), noise(s), and/or signal(s) by way of a microphone and/or other similar devices.

In some examples, user interface 204 may include a display that serves as a viewfinder for still camera and/or video camera functions supported by computing system 200. Additionally, user interface 204 may include one or more buttons, switches, knobs, and/or dials that facilitate the configuration and focusing of a camera function and the capturing of images. It may be possible that some or all of these buttons, switches, knobs, and/or dials are implemented by way of a touch-sensitive panel.

Processor 206 may comprise one or more general purpose processors - e.g., microprocessors - and/or one or more special purpose processors - e.g., digital signal processors (DSPs), graphics processing units (GPUs), floating point units (FPUs), network processors, or application-specific integrated circuits (ASICs). In some instances, special purpose processors may be capable of image processing, image alignment, and merging images, among other possibilities. Data storage 208 may include one or more volatile and/or non-volatile storage components, such as magnetic, optical, flash, or organic storage, and may be integrated in whole or in part with processor 206. Data storage 208 may include removable and/or non-removable components.

Processor 206 may be capable of executing program instructions 218 (e.g., compiled or non-compiled program logic and/or machine code) stored in data storage 208 to carry out the various functions described herein. Therefore, data storage 208 may include a non-transitory computer-readable medium, having stored thereon program instructions that, upon execution by computing system 200, cause computing system 200 to carry out any of the methods, processes, or operations disclosed in this specification and/or the accompanying drawings. The execution of program instructions 218 by processor 206 may result in processor 206 using data 212.

By way of example, program instructions 218 may include an operating system 222 (e.g., an operating system kernel, device driver(s), and/or other modules) and one or more application programs 220 (e.g., camera functions, address book, email, web browsing, social networking, audio-to-text functions, text translation functions, and/or gaming applications) installed on computing system 200. Similarly, data 212 may include operating system data 216 and application data 214. Operating system data 216 may be accessible primarily to operating system 222, and application data 214 may be accessible primarily to one or more of application programs 220. Application data 214 may be arranged in a file system that is visible to or hidden from a user of computing system 200.

Application programs 220 may communicate with operating system 222 through one or more application programming interfaces (APIs). These APIs may facilitate, for instance, application programs 220 reading and/or writing application data 214, transmitting or receiving information via communication interface 202, receiving and/or displaying information on user interface 204, and so on.

In some cases, application programs 220 may be referred to as "apps" for short. Additionally, application programs 220 may be downloadable to computing system 200 through one or more online application stores or application markets. However, application programs can also be installed on computing system 200 in other ways, such as via a web browser or through a physical interface (e.g., a USB port) on computing system 200.

Camera components 224 may include, but are not limited to, an aperture, shutter, recording surface (e.g., photographic film and/or an image sensor), lens, shutter button, infrared projectors, and/or visible-light projectors. Camera components 224 may include components configured for capturing of images in the visible-light spectrum (e.g., electromagnetic radiation having a wavelength of 380 - 700 nanometers) and/or components configured for capturing of images in the infrared light spectrum (e.g., electromagnetic radiation having a wavelength of 701 nanometers - 1 millimeter), among other possibilities. Camera components 224 may be controlled at least in part by software executed by processor 206.

### III. Example Image Inpainting System

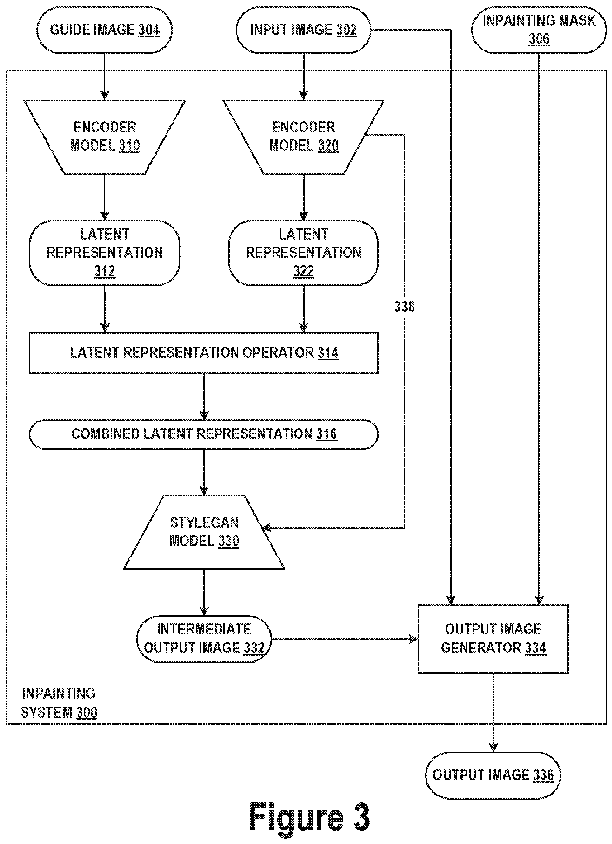

Figure 3 illustrates inpainting system 300 that may be configured to inpaint a region of an input image based on a guide image. Specifically, inpainting system 300 may include encoder model 310, encoder model 320, latent representation operator 314, StyleGAN model 330, and output image generator 334. Inpainting system 300 may be configured to generate output image 336 based on input image 302, guide image 304, and inpainting mask 306.

Input image 302 may represent any type of image data including, for example, a red-green-blue (RGB) image and/or a grayscale image, among other possibilities. Input image 302 may include a region to be inpainted, which may be indicated and/or defined by and/or based on an indication of the region to be inpainted, such as, for example, inpainting mask 306. The region to be inpainted may include one or more pixels of input image 302 that are intended to be assigned new pixel values, and may thus indicate one or more portions of input image 302 that are to be replaced with new image content. The region to be inpainted may alternatively be referred to as a missing region, an erased region, and/or a removed region, among other possibilities. The region to be inpainted in input image 302 may have various shapes and/or sizes.

In one example, inpainting mask 306 may include a binary image that uses a first binary value (e.g., 1) to indicate pixels of input image 302 to be inpainted and a second binary value (e.g., 0) to indicate pixels of input image 302 to be preserved. In another example, inpainting mask 306 may include a grayscale image generated based on fitting a statistical distribution (e.g., a Gaussian distribution) to the remaining region of input image 302, such that pixels near the region to be inpainted have higher values than pixels that are further away from the region to be inpainted. Such a grayscale image may be useful in quantifying a similarity of portions of input image 302 and guide image 304, since similarity between input image 302 and guide image 304 may be more important for pixels near the region to be inpainted and may be less important for pixels that are further away from the region to be inpainted. In some implementations, inpainting mask 306 may have the same resolution as input image 302.

In some implementations, the indication of the region to be inpainted may include, for example, a list of the pixel coordinates of input image 302 that are to be inpainted, and such a list may be arranged into a format other than a mask. Nonetheless, various possible formats of the indication of the region to be inpainted may be convertible to, and thus at least partially equivalent to, inpainting mask 306. Thus, inpainting mask 306 is used herein as a representative example of various possible indications of the region to be inpainted in input image 302.

Guide image 304 may represent any type of image data including, for example, a red-green-blue (RGB) image and/or a grayscale image, among other possibilities. Guide image 304 may be used by inpainting system 300 to guide the inpainting of the region to be inpainted in input image 302, as indicated by inpainting mask 306. Specifically, guide image 304 may contain image content that is to be incorporated into the region to be inpainted so that, following inpainting, this region at least partly visually resembles guide image 304. Guide image 304 may alternatively be referred to as an example image and/or a reference image, among other possibilities.

The inpainted image content generated by StyleGAN model 330 may include a combination of visual features of input image 302 and visual features of guide image 304. StyleGAN model 330 may be configured to incorporate the visual features of guide image 304 into the region to be inpainted in input image 302 in a manner that is contextually and/or visually consistent with the remaining (i.e., non-inpainted) parts of input image 302, such that output image 336 looks realistic, natural, visually-plausible, and/or non-artificial.

Accordingly, guide image 304 may allow a user to control the inpainting process carried out by inpainting system 300. Specifically, by selecting different instances of guide image 304, the region to be inpainted in input image 302 may be inpainted with different visual features. Additionally, when the region to be inpainted is relatively large, and thus takes up more than a threshold fraction (e.g., 10%, 25%, 50%) of input image 302, it may be difficult to generate plausible image content for the region to be inpainted based on the remaining parts of input image 302. That is, input image 302 might not include sufficient remaining image data to allow for satisfactory inpainting, or the remaining image data might not include image data that is useful for the region to be inpainted, for example because the region to be inpainted includes a portion that is relatively distinct from the remaining image data. For example, the region to be inpainted may have previously represented a building, but the remaining parts of input image 302 might not represent any buildings. Accordingly, guide image 304 may provide additional image content that allows for improved inpainting, and thus results in output image 336 looking more realistic, natural, and/or non-artificial than an output image based exclusively on input image 302.

In order to perform such inpainting, encoder model 310 may be configured to generate latent representation 312 based on guide image 304, and encoder model 320 may be configured to generate latent representation 322 based on input image 302. Latent representation 312 may be a first tensor representing guide image 304 in a latent space, and latent representation 322 may be a second tensor representing input image 302 in the latent space. For example, latent representations 312 and 322 may each include one or more corresponding feature vectors (e.g., a row or column vector having N elements, such as a 1x512 feature vector), and/or one or more corresponding feature maps (e.g., D feature maps each having a width W and a height H, such as 512 8x8 feature maps), among other possibilities.

In some implementations, encoder models 310 and 320 may share the same architecture and parameters. That is, encoder models 310 and 320 may be two instances of the same model. In other implementations, encoder models 310 and 320 may have different architectures and/or parameters. Accordingly, one or more of latent representations 312 and/or 322 may be normalized to have a shared size and/or value range, among other possibilities. In one example, encoder model 310 and/or encoder model 320 may utilize a VGG architecture.

Latent representation operator 314 may be configured to generate combined latent representation 316 based on latent representations 312 and 322. In one example, latent representation operator 314 may include a concatenation. Thus, combined latent representation 316 may include a concatenation of latent representations 312 and 322. In another example, latent representation operator 314 may include a (first) cross-attention operator. Thus, combined latent representation 316 may include cross-attention value(s) between latent representations 312 and 322. The cross-attention operator may include various possible variations of the attention operator, including global attention, window attention, random attention, multi-headed attention, soft attention, and/or hard attention, among other possibilities. Accordingly, combined latent representation 316 may represent the visual features of both input image 302 and guide image 304 and/or one or more relationships between these visual features. Specifically, combined latent representation 316 may represent input image 302 and guide image 304 as a subset of a deep latent and/or feature space, rather than using pixel space, and thus allow StyleGAN model 330 to better understand and/or combine the visual features of images 302 and 304.

StyleGAN model 330 may be configured to generate intermediate output image 332 based on combined latent representation 316. In some implementations, StyleGAN model 330 may be additionally configured to generate intermediate output image 332 based on skip-connection 338 with one or more intermediate layers of encoder model 320, and/or a skip-connection (not shown) with one or more intermediate layers of encoder model 310.

StyleGAN model 330 may represent one or more versions of the Style Generative Adversarial Network, as detailed in, for example, a paper titled "A Style-Based Generator Architecture for Generative Adversarial Networks," authored by Karras et al, and published as arXiv:1812.04948 (i.e., StyleGAN1), a paper titled "Analyzing and Improving the Image Quality of StyleGAN," authored by Karras et al., and published as arXiv:1912.04958 (i.e., StyleGAN2), a paper titled "Alias-Free Generative Adversarial Networks," authored by Karras et al., and published as arXiv:2106.12423 (i.e., StyleGAN3), and/or other variations thereof. Accordingly, StyleGAN model 330 may include an adaptive instance normalization component, a weight demodulation component, and/or an alias-free architecture, among other possibilities. Additionally or alternatively, StyleGAN model 330 may include architectural components of other types of neural networks configured to generate image data.

Intermediate output image 332 may include inpainted image content for at least the region to be inpainted in input image 302 and, in some cases, may additionally include new and/or modified image content for other regions of input image 302. Intermediate output image 332 may have a same resolution as input image 302, may be a scaled version of input image 302, and/or may represent a subset of input image 302 that includes the region to be inpainted, among other possibilities.

Output image generator 334 may be configured to generate output image 336 based on input image 302, inpainting mask 306, and intermediate output image 332. Specifically, output image generator 334 may be configured to replace the region to be inpainted in input image 302, as indicated by inpainting mask 306, with the inpainted image content of a corresponding portion of intermediate output image 332. For example, output image generator 334 may implement the function $I_{OUTPUT} = I_{INPUT}(1 - M) + I_{INTERMEDIATE}M$, where $I_{OUTPUT}$ represents output image 336, $I_{INPUT}$ represents input image 302, $I_{INTERMEDIATE}$ represents intermediate output image 332, $M$ represents inpainting mask 306, and $(1 - M)$ represents the residual of inpainting mask 306 (i.e., portions of input image 302 that are to remain unmodified). In some implementations, output image generator 334 may be configured to apply one or more blending functions to pixels around (e.g., within a threshold pixel distance of) the edges of the region to be inpainted, thereby creating a smooth transition between the inpainted content and the original content of input image 302.

IV. **Example StyleGAN Architectures**

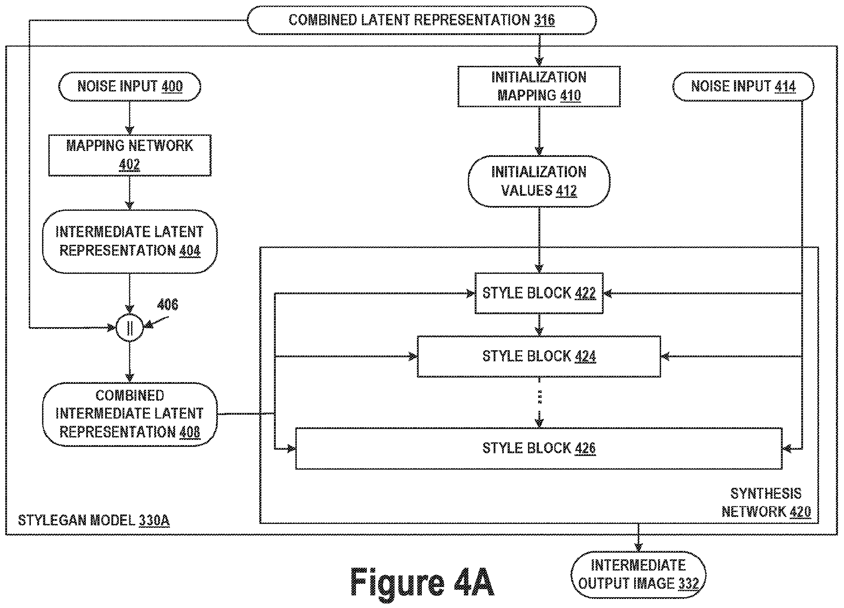

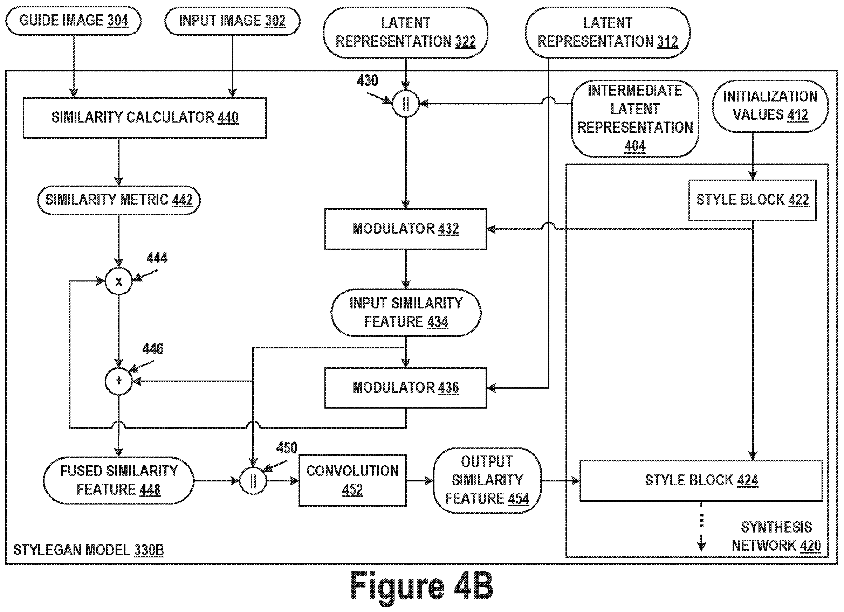

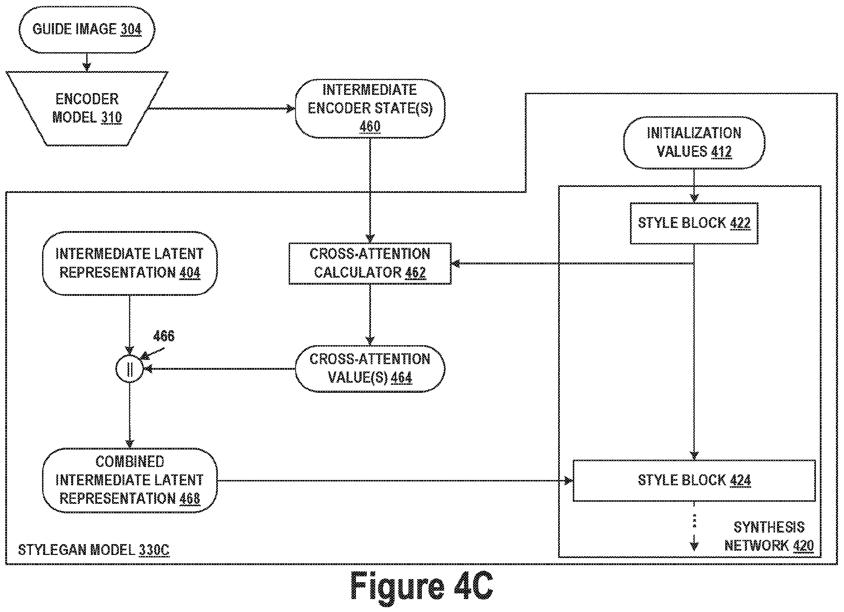

Figures 4A, 4B, and 4C illustrate example architectures of StyleGAN model 330 that may be used by inpainting system 300. Specifically, Figures 4A, 4B, and 4C illustrate StyleGAN models 330A, 330B, and 330C, respectively, each of which represents a potential architecture for StyleGAN model 330. Aspects of StyleGAN models 330A, 330B, and 330C may be combined and/or interchanged to achieve a desired quality of intermediate output image 332, model size, model runtime, and/or other performance metrics.

Specifically, as shown in Figure 4A, StyleGAN model 330A may include mapping network 402, synthesis network 420, and initialization mapping 410, each of which may be learnable during training of StyleGAN model 330 and/or inpainting system 300. In one example, mapping network 402 may include a plurality (e.g., 8) fully-connected neural network layers arranged in a sequence. Synthesis network may include style block 422 and style blocks 424 through 426, which may collectively be referred to as style blocks 422 - 426. Each respective style block of style blocks 422 - 426 may be associated with a corresponding size scale. For example, style blocks 422 - 426 may include 18 style blocks, with style blocks 422 and 424 corresponding to a 4x4 resolution, the two style blocks subsequent to style block 424 corresponding to an 8x8 resolution, and style block 426 and its preceding style block corresponding to a 1024x1024 resolution. An output of a given style block may be provided as input to a subsequent style block, thus allowing style blocks 422 - 426 to progressively increase the resolution of the representation of intermediate output image 332. Intermediate output image 332 may be generated by a final block (not shown) of synthesis network 420 configured to convert an output of style block 426 into image data.

The mathematical operations applied by each of style blocks 422 - 426 may depend on the StyleGAN version being utilized in a particular implementation, with some architectural commonalities being present regardless of the StyleGAN version. For example, each respective style block may include and/or be associated with a learned affine transformation *A,* a learned noise broadcast operation *B,* and a learned convolution (e.g., a 3x3 convolution). Additionally, every other style block may include an upsample operation. In some cases, style blocks 422 - 426 may implement an adaptive instance normalization operation (as in StyleGAN1), a weighted demodulation operation (as in StyleGAN2), and/or an alias-free architecture (as in StyleGAN3), among other possible StyleGAN variations.

Mapping network 402 may be configured to generate intermediate latent representation 404 based on noise input 400. Noise input 400 may be expressed as *z ∈ Z,* and may be alternatively referred to as a latent code, latent point, and/or a latent vector, among other possibilities. Noise input 400 may be sampled from, based on, and/or using a Gaussian distribution corresponding to latent space Z.

Intermediate latent representation 404 may be expressed as *w ∈ W,* and may include a vector having a plurality of values. Concatenator 406 may be configured to concatenate combined latent representation 316 with intermediate latent representation 404, thereby generating combined intermediate latent representation 408. Combined intermediate latent representation 408 may be provided as input to each of style blocks 422 - 426. For example, combined intermediate latent representation 408 may be provided as input to a corresponding affine transformation *A* of each respective style block of style blocks 422 - 426. Additionally, noise input 414 may be provided as input to each of style blocks 422 - 426, and may control the variability of image features at different size scales.

Initialization mapping 410 may be configured to generate initialization values 412 based on combined latent representation 316. Initialization values 412 may be provided as input to style block 422 (i.e., the initial style block of style blocks 422 - 426) to initialize synthesis network 420. Specifically, initialization values 412 may be used in place of the 4x4x512 constant conventionally used to initialize the initial style block of synthesis network 420. Accordingly, initialization mapping 410 may transform combined latent representation 316 to, for example, a 4x4x512 tensor containing initialization values 412.

Figure 4B illustrates aspects of a second possible architecture of StyleGAN model 330, which are according to the invention. Specifically, StyleGAN model 330B may include similarity calculator 440, concatenators 430 and 450, modulators 432 and 436, multipliers 444, adder 446, convolution 452. StyleGAN model 330B may also include mapping network 402 configured to generate intermediate latent representation 404, initialization mapping 410 configured to generate initialization values 412, and synthesis network 420, aspects of which are omitted from Figure 4B for clarity of illustration. Modulators 432 and 436 may each represent, for example, a respective neural network model and/or aspects thereof. One or more parameters of modulator 432, modulator 436, similarity calculator 440, and/or convolution 452 may be leamable during training of StyleGAN model 330B and/or inpainting system 300.

Similarity calculator 440 may be configured to generate similarity metric 442 between guide image 304 and input image 302. Similarity metric 442 may include one or more similarity values configured to quantify a similarity between various regions and/or visual features of guide image 304 and input image 302. Similarity calculator 440 may be configured to generate similarity metric 442 based on guide image 304 and input image 302, latent representations 312 and 322, and/or inpainting mask 306.

In one example, similarity calculator 440 may be configured to determine a cosine distance between latent representation 332 and latent representation 312. In another example, similarity calculator 440 may be a learnable model configured to generate similarity metric 442. In a further example, similarity calculator 440 may use the grayscale version of inpainting mask 306 to weight the similarity between input image 302 and guide image 304. That is, a similarity between a portion of guide image 304 and pixels of input image 302 that are near the region to be inpainted may contribute to similarity metric 442 more than a similarity between the portion of guide image 304 and pixels of input image 302 that are further away from the region to be inpainted, since the inpainted image content should blend well with image content of input image 302 at the boundaries of the region to be inpainted, but may differ from image content of input image 302 that is not near the boundaries of the region to be inpainted.

By quantifying the similarity between different aspects of guide image 304 and input image 302, similarity metric 442 may allow StyleGAN model 330B to incorporate into intermediate output image 332 aspects of guide image 304 that are similar to aspects of input image 302. That is, similarity calculator 440 may provide a model component configured to explicitly quantify the similarity between input image 302 and guide image 304, thereby allowing other parts of StyleGAN model 330B to specialize in performing other aspects of the inpainting process based on similarity metric 442. Accordingly, StyleGAN model 330B may be configured to generate inpainted image content that, when inserted into the region to be inpainted in input image 302, appears contextually and/or visually coherent and/or consistent with the remaining parts of input image 302. For example, inpainted image content at the transitions between the region to be inpainted and the remaining parts of input image 302 may appear more natural, realistic, non-artificial, and/or visually-plausible.

Concatenator 430 may be configured to generate a concatenation of latent representation 322 and intermediate latent representation 404, which may be provided as input to modulator 432. Modulator 432 may be configured to generate input similarity feature 434 based on a comodulation and/or processing of (i) the concatenation of latent representation 322 and intermediate latent representation 404 and (ii) an output of style block 422. Modulator 436 may be configured to comodulate and/or process input similarity feature 434 and latent representation 312. Multiplier 444 may be configured to multiply an output of modulator 436 by similarity metric 442. Adder 446 may be configured to add an output of multiplier 444 to input similarity feature 434, thereby generating fused similarity feature 448.

Concatenator 450 may be configured to concatenate fused similarity feature 448 with input similarity feature 434. Convolution 452 may be configured to generate output similarity feature 545 based on the concatenation of fused similarity feature 448 and input similarity feature 434. Output similarity feature 454 may be provided as input to style block 424. For example, output similarity feature 454 may be provided as input to an upsampling operator of style block 424 and/or a convolution operator of style block 424.

A commensurate set of operations may be performed based on the respective outputs of other style blocks of synthesis network 420. For example, the output of each respective style block of style blocks 422 - 426 may be processed in the manner illustrated by Figure 4B to generate a corresponding instance of input similarity feature 434, fused similarity feature 448, and output similarity feature 454, with the output similarity feature of the respective style block being provided as input to a style block immediately following the respective style block. Thus, in some cases, a respective instance of each of modulators 432 and 436, multiplier 444, adder 446, concatenators 430 and 450, and convolution 452 may be a subset of one or more corresponding style block of style blocks 422 - 426.

The computation carried out by StyleGAN model 330B may be expressed as

$$S_N^{INPUT} = M_N^1(B_N^{OUT}, F_{INPUT} \,||\, w), \qquad S_N^{FUSED} = S_N^{INPUT} + RM_N^2(S_N^{INPUT}, F_{GUIDE}) \quad , \quad \text{and}$$

$$S_N^{OUTPUT} = Conv1x1(S_N^{INPUT} \,||\, S_N^{FUSED})$$

, where N is iterated from 0 (corresponding to style block 422) to M - 1 (corresponding to style block 426), M represents the number of style blocks 422 - 426 (e.g., 18), $||$ represents a concatenation operation, $F_{INPUT}$ represents latent representation 322, $F_{GUIDE}$ represents latent representation 312, R represents similarity metric *442,* $B_N^{OUT}$ represents an output of the *Nth* style block, w represents intermediate latent representation 404, $M_N^1$ represents a learned function implemented by modulator 432 for *Nth* style block, $M_N^2$ represents a learned function implemented by modulator 436 for *Nth* style block, $S_N^{INPUT}$ represents input similarity feature 434 computed for the *Nth* style block, $S_N^{FUSED}$ represents fused similarity feature 448 computed for the *Nth* style block, $S_N^{OUTPUT}$ represents output similarity feature 454 computed for the *Nth* style block and provided as input to the *(N + 1)th* style block.

In some implementations, similarity metric 442 may additionally or alternatively be specified by a user. This may allow the user to manually control a ratio of features of input image 302 and guide image 304. For example, by increasing similarity metric 442, a contribution of latent representation 312 may be increased relative to a contribution of latent representation 322, thus allowing the inpainted image content in output image 336 to look more like guide image 304. Specifically, increasing similarity metric 442 increases the value of fused similarity feature 448, which is based on both latent representation 322 and latent representation 312, relative to a value of input similarity feature, which is based on latent representation 322 but not on latent representation 312. Conversely, by decreasing similarity metric 442, a contribution of latent representation 322 may be increased relative to a contribution of latent representation 312, thus allowing the inpainted image content in output image 336 to look more like input image 302.

Figure 4C illustrates aspects of a third possible architecture of StyleGAN model 330. Specifically, StyleGAN model 330C may include (second) cross-attention calculator 462 and concatenator 466. StyleGAN model 330C may also include mapping network 402 configured to generate intermediate latent representation 404, initialization mapping 410 configured to generate initialization values 412, and synthesis network 420, aspects of which are omitted from Figure 4C for clarity of illustration. One or more parameters of cross-attention calculator 462 may be learnable during training of StyleGAN model 330B and/or inpainting system 300.

Cross-attention calculator 462 may be configured to determine cross-attention value(s) based on (i) intermediate encoder state(s) 460 of encoder model 310 and (ii) one or more intermediate outputs of one or more of style blocks 422 - 426. For example, cross-attention calculator 462 may be configured to determine cross-attention value(s) 464 based on an intermediate output of style block 422 and a corresponding intermediate encoder state of intermediate encoder state(s) 460. Specifically, cross-attention calculator 462 may be configured to compare a given intermediate style block output to a corresponding intermediate encoder state that has a same and/or matching resolution. For example, an intermediate encoder state having a 16x16 resolution may be compared to an intermediate style block output that also has a 16x16 resolution.

Cross-attention calculator 464 may thus search guide image 304 for patches and/or features that are similar to input image 302, thereby allowing similar, rather than dissimilar patches and/or features of guide image 304 to be used for generating the inpainted image content. Specifically, cross-attention calculator 464 may perform this search in latent space, rather than pixel space, and may thus be able to consider various semantics of guide image 304 and input image 302.

Concatenator 466 may be configured to concatenate intermediate latent representation 404 with cross-attention value(s) 464, and thereby generate combined intermediate latent representation 468. Combined intermediate latent representation 468 may be provided as input to style block 424. For example, combined intermediate latent representation 468 may be provided as input to the affine transformation $A$ of style block 424.

A commensurate set of operations may be performed based on the respective outputs of other style blocks of synthesis network 420. For example, cross-attention calculator 462 may be configured to determine corresponding cross-attention value(s) for each of a plurality of intermediate style block outputs of style blocks 422 - 426 and a plurality of corresponding intermediate encoder states of encoder model 310. Specifically, the output of each respective style block of style blocks 422 - 426 may be processed as illustrated in Figure 4C to generate a corresponding instance of cross-attention value(s) 464 and combined intermediate latent representation 468, with combined intermediate latent representation 468 being provided as input to a style block immediately following the respective style block. Thus, in some cases, a respective instance of each of cross-attention calculator 462 and concatenator 466 may be a subset of a corresponding style block of style blocks 422 - 426.

## V. Example Training Operations

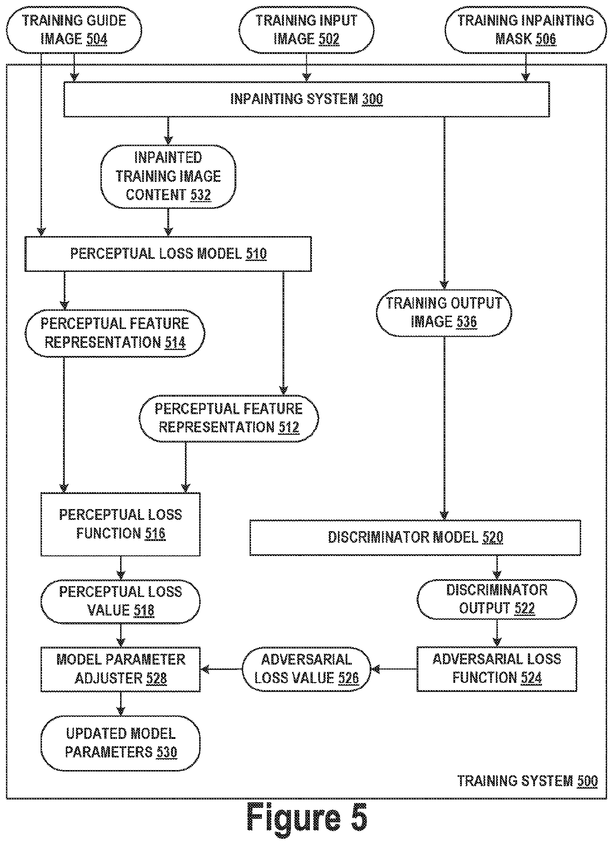

Figure 5 illustrates an example training system 500 that may be used to train one or more components of inpainting system 300. Specifically, training system 500 may include inpainting system 300, perceptual loss model 510, perceptual loss function 516, discriminator model 520, adversarial loss function 524, and model parameter adjuster 528. Training system 500 may be configured to determine updated model parameters 530 based on training input image 502, training guide image 504, and training inpainting mask 506. Training input image 502, training guide image 504, and training inpainting mask 506 may be analogous to input image 302, guide image 304, and inpainting mask 306, respectively, but may be processed at training time rather than at inference time.

Inpainting system 300 may be configured to generate, based on training input image 502, training guide image 504, and training inpainting mask 506, training output image 536, which may be analogous to output image 336. Training output image 536 may include inpainted training image content 532, which may represent the image content synthesized by inpainting system 300 for the region to be inpainted in training input image 502.

Specifically, encoder model 320 of inpainting system 300 may be configured to generate a first training latent representation (analogous to latent representation 322) of training input image 502 and encoder model 310 may be configured to generate a second training latent representation (analogous to latent representation 312) of training guide image 504. Additionally, latent representation operator 316 may be configured to generate a combined training latent representation (analogous to combined latent representation 316) based on the first training latent representation and the second training latent representation. StyleGAN model 330 may be configured to generate inpainted training image content 532, which may form part of an intermediate training output image (analogous to intermediate output image 332), based on the combined training latent representation. Output image generator 334 may be configured to generate training output image 536 based on the intermediate training output image, training input image 502, and training inpainting mask 506.

A quality with which inpainting system 300 inpaints the region to be inpainted in training input image 502 based on training guide image 504 may be quantified using perceptual loss model 510, perceptual loss function 516, discriminator model 520, and/or adversarial loss function 524, among other possibilities. Since inpainted training image content 532 is expected to include a combination of visual features of both training guide image 504 and training input image 502, directly comparing either of these images to inpainted training image content 532 might not accurately quantify the inpainting quality. Accordingly, loss functions 516 and 524 may instead quantify the inpainting quality using feature and/or latent space and discriminator space.

Specifically, perceptual loss model 510 may be configured to generate perceptual feature representation 514 based on training guide image 504 and perceptual feature representation 512 based on inpainted training image content 532. Perceptual feature representations 514 and 512 may represent, for example, vector embeddings of the corresponding image data that are indicative of various visual features of the corresponding image data. Perceptual loss function 516 may be configured to generate perceptual loss value 518 based on a comparison of perceptual feature representations 514 and 512. For example, perceptual loss function 516 may be configured to determine an L-1 and/or L-2 distance between perceptual feature representations 514 and 512, thereby quantifying how visually similar inpainted training image content 532 is to training guide image 504.

In some implementations, perceptual loss model 510 may additionally or alternatively be configured to generate an additional perceptual feature representation of at least part of training input image 502, and perceptual loss function 516 may be configured to generate perceptual loss value 518 based additionally or alternatively on comparing this additional perceptual feature representation to perceptual feature representation 512. Further, in some implementations, perceptual loss function 516 may be configured to determine a training similarity metric (which may be analogous to similarity metric 442) indicative of a similarity between training input image 502 and training guide image 504. Perceptual loss value 518 may be determined by weighting the comparison of perceptual feature representation 514 and perceptual feature representation 512 according to the training similarity metric. Specifically, perceptual loss function 516 may be configured to reward (i) the presence in inpainted training image content 532 of features that are similar between images 502 and 504 more than (ii) the presence in inpainted training image content 532 of features that are dissimilar between images 502 and 504, thereby conditioning inpainting system 300 to extract from a given guide image visual features that are similar to visual features of an input image to be inpainted.

Discriminator model 520 may be configured to generate discriminator output 522 based on training output image 536. Specifically, discriminator output 522 may indicate whether discriminator model 520 estimates that training output image 536 is generated by inpainting system 300 or is a natural image that has not been generated by inpainting system 300. Thus, inpainting system 300 and discriminator model 520 may implement an adversarial training architecture. Accordingly, adversarial loss function 524 may include, for example, a hinge adversarial loss, and may be configured to generate adversarial loss value 526 based on discriminator output 522. Adversarial loss function 526 may thus incentivize inpainting system 300 to generate inpainted image content that appears natural, realistic, and/or non-artificial.

Model parameter adjuster 528 may be configured to determine updated model parameters 530 based on perceptual loss value 518 and adversarial loss value 526, and possibly other loss values that may be determined by other loss functions of training system 500. Model parameter adjuster 528 may be configured to determine a total loss value based on a weighted sum of these loss values, where the relative weight of the corresponding loss values may be an adjustable training parameter. Updated model parameters 530 may include one or more updated parameters of any trainable component of inpainting system 300, including, for example, encoder models 310 and 320, mapping network 402, initialization mapping 410, synthesis network 420, similarity calculator 440, modulators 432 and 436, convolution 452, and/or cross-attention calculator 462, among other possibilities.

Model parameter adjuster 528 may be configured to determine updated model parameters 530 by, for example, determining a gradient of the total loss function. Based on this gradient and the total loss value, model parameter adjuster 528 may be configured to select updated model parameters 530 that are expected to reduce the total loss value, and thus improve performance of inpainting system 300. After applying updated model parameters 530 to inpainting system 300, the operations discussed above may be repeated to compute another instance of the total loss value and, based thereon, another instance of updated model parameters 530 may be determined and applied to inpainting system 300 to further improve the performance thereof. Such training of inpainting system 300 may be repeated until, for example, the total loss value is reduced to below a target threshold loss value.

## VI. Example Images

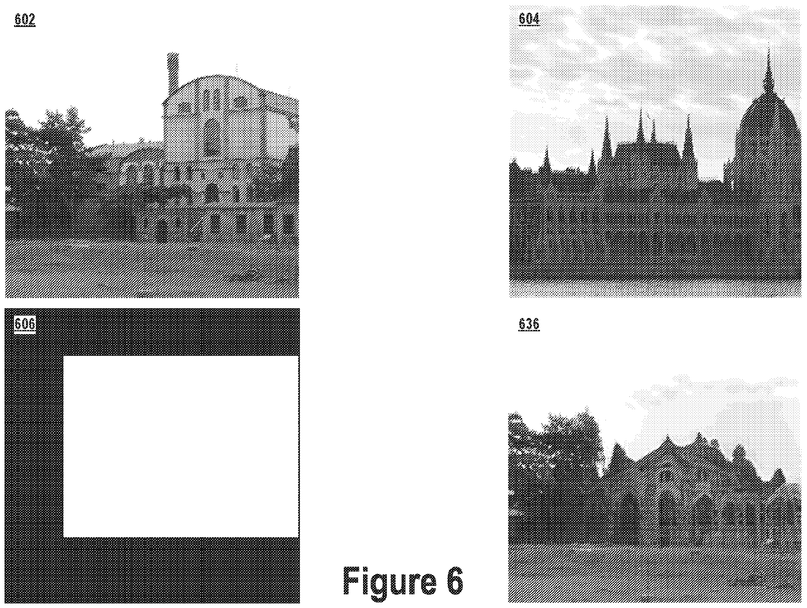

Figure 6 includes example images that illustrate the performance of inpainting system 300. Specifically, Figure 6 includes input image 602 as a representative example of input image 302, guide image 604 as a representative example of guide image 304, inpainting mask 606 as a representative example of inpainting mask 306, and output image 636 as a representative example of output image 336.

Input image 602 represents a first building having a first architectural style, which may be described as Industrial. Input image 602 may include a region to be inpainted, as indicated by inpainting mask 606. Specifically, inpainting mask 606 indicates the region to be inpainted in input image 602 using a white color, and regions of input image 602 that are not intended to be inpainted using a black color. Although input image 602 includes the original image content of the region to be inpainted, it is to be understood that, in some cases, the region to be inpainted might not include the original image content (e.g., due to intentional removal thereof and/or accidental loss thereof). Guide image 604 represents a second building having a second architectural style, which may be described as Gothic.

Output image 636 includes, in the region to be inpainted, inpainted image content having visual features of both input image 602 and guide image 604. Specifically, output image 636 includes, in the region to be inpainted, a representation of a third building that resembles the architectural style of the second building depicted in guide image 604. Output image 636 also includes, in the region to be inpainted, representation of parts of trees, clouds, and the sky, visual aspects of which may have been derived from input image 602 and/or guide image 604. Thus, the third building and the surrounding scenery are inpainted by inpainting model 300 in a manner that is visually coherent with the original (i.e., non-inpainted) parts of input image 602. Specifically, the inpainted portion of output image 636 includes visual features of both input image 602 and guide image 604 arranged in a natural, realistic, visually-plausible, and/or non-artificial manner.

## VII. Additional Example Operations

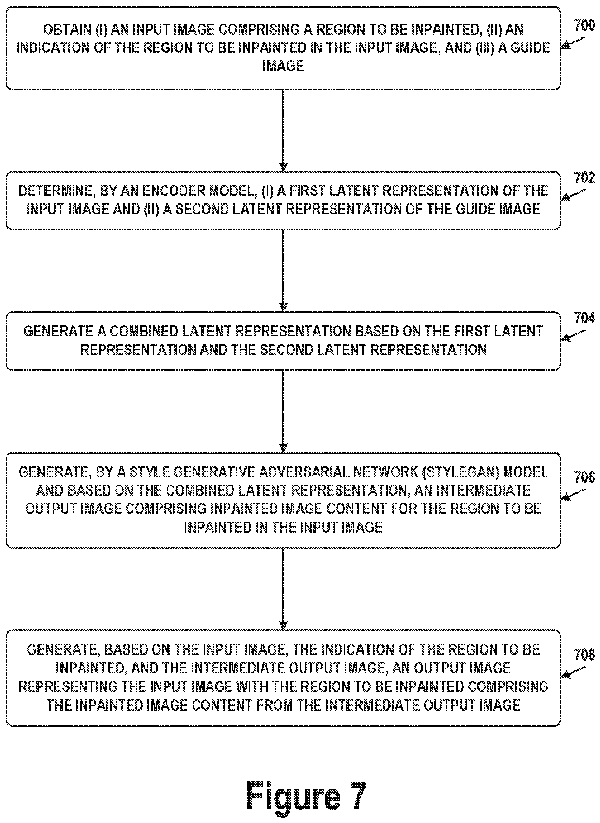

Figure 7 illustrates a flow chart of operations related to inpainting a region of an input image based on a guide image. The operations may be carried out by computing device 100, computing system 200, and/or inpainting system 300, among other possibilities. The embodiments of Figure 7 may be simplified by the removal of any one or more of the features shown therein. Further, these embodiments may be combined with features, aspects, and/or implementations of any of the previous figures or otherwise described herein.

Block 700 may involve obtaining (i) an input image comprising a region to be inpainted, (ii) an indication of the region to be inpainted in the input image, and (iii) a guide image.

Block 702 may involve determining, by an encoder model, (i) a first latent representation of the input image and (ii) a second latent representation of the guide image.

Block 704 may involve generating a combined latent representation based on the first latent representation and the second latent representation.

Block 706 may involve generating, by a style generative adversarial network (StyleGAN) model and based on the combined latent representation, an intermediate output image comprising inpainted image content for the region to be inpainted in the input image.

Block 708 may involve generating, based on the input image, the indication of the region to be inpainted, and the intermediate output image, an output image representing the input image with the region to be inpainted comprising the inpainted image content from the intermediate output image.

In some embodiments, the StyleGAN model may be configured to generate the inpainted image content to include a combination of visual features of the guide image and visual features of the input image.

In some embodiments, the first latent representation may include a first feature vector, and the second latent representation may include a second feature vector.

In some embodiments, the first latent representation may include a first feature map, and the second latent representation may include a second feature map.

In some embodiments, generating the combined latent representation may include concatenating the first latent representation and the second latent representation.

In some embodiments, generating the combined latent representation may include determining a first cross-attention between the first latent representation and the second latent representation.

In some embodiments, the StyleGAN model may include a mapping network and a synthesis network. The synthesis network may include a plurality of style blocks. Generating the intermediate output image may include generating, by the mapping network and based on a noise input, an intermediate latent representation, and generating a combined intermediate latent representation based on the intermediate latent representation and the combined latent representation. Generating the intermediate output image may also include generating, by the synthesis network, the intermediate output image by (i) initializing an initial style block of the plurality of style blocks based on the combined latent representation and (ii) providing the combined intermediate latent representation as input to each respective style block of the plurality of style blocks.

In some embodiments, the StyleGAN model may include a mapping network and a synthesis network. The synthesis network may include a plurality of style blocks. Generating the intermediate output image may include generating, by the mapping network, an intermediate latent representation, and determining a similarity metric indicative of a similarity between the input image and the guide image. Generating the intermediate output image may also include generating, for a respective style block of the plurality of style blocks, an input similarity feature based on a comodulation of (i) an output of a preceding style block of the plurality of style blocks, (ii) the intermediate latent representation, and (iii) the first latent representation. Generating the intermediate output image may additionally include generating, for the respective style block, a fused similarity feature based on a sum of (i) the input similarity feature and (ii) a product of the similarity metric and a comodulation of the input similarity feature and the second latent representation. Generating the intermediate output image may further include generating, for the respective style block, an output similarity feature based on a convolution of (i) the input similarity feature and (ii) the fused similarity feature, and providing the output similarity feature as input to the respective style block.

In some embodiments, determining the similarity metric may include one or more of: determining a distance metric between the first latent representation and the second latent representation, generating the similarity metric by a similarity model based on the input image, the guide image, and the indication of the region to be inpainted, or comparing the input image to the guide image by weighting pixels of the input image according to a Gaussian distribution defined based on the indication of the region to be inpainted.

In some embodiments, the StyleGAN model may include a mapping network and a synthesis network. The synthesis network may include a plurality of style blocks. Generating the intermediate output image may include generating, by the mapping network, an intermediate latent representation, and determining a second cross-attention between (i) an intermediate encoder state of the encoder model based on the guide image and (ii) an intermediate style block state of a corresponding style block of the plurality of style blocks. A resolution of the intermediate encoder state may match a resolution of the intermediate style block state. Generating the intermediate output image may also include generating a concatenation of the second cross-attention and the intermediate latent representation, and providing the concatenation as input to a subsequent style block of the plurality of style blocks (e.g., a style block immediately following the corresponding style block).

In some embodiments, the intermediate style block state of the corresponding style block may include an output of the corresponding style block.

In some embodiments, generating the output image may include determining a sum of (i) a first product of the input image and an inverse of the indication of the region to be inpainted and (ii) a second product of the intermediate output image and the indication of the region to be inpainted.

In some embodiments, the StyleGAN model may be and/or may have been trained by a training process that includes obtaining (i) a training input image that includes a training region to be inpainted, (ii) a training indication of the region to be inpainted in the training input image, and (iii) a training guide image. The training process may also include determining, by the encoder model, (i) a first training latent representation of the training input image and (ii) a second training latent representation of the training guide image, and generating a combined training latent representation based on the first training latent representation and the second training latent representation. The training process may additionally include generating, by the StyleGAN model and based on the combined training latent representation, an intermediate training output image that includes inpainted training image content for the training region to be inpainted in the training input image. The training process may further include determining, by a perceptual loss model, (i) a first perceptual feature representation of the training guide image and (ii) a second perceptual feature representation of the inpainted training image content. The training process may yet further include determining a perceptual loss value based on a comparison of the first perceptual feature representation and the second perceptual feature representation, and adjusting one or more parameters of the StyleGAN model based on the perceptual loss value.

In some embodiments, the training process may also include generating, based on the training input image, the training indication of the region to be inpainted, and the intermediate training output image, a training output image representing the training input image with the region to be inpainted including the inpainted training image content from the intermediate training output image. The training process may further include determining an adversarial loss value based on processing of the training output image by a discriminator model, and adjusting the one or more parameters of the StyleGAN model further based on the adversarial loss value.

In some embodiments, the training process may further include determining a training similarity metric indicative of a similarity between the training input image and the training guide image, and determining the perceptual loss value by weighting the comparison of the first perceptual feature representation and the second perceptual feature representation according to the training similarity metric.

In some embodiments, a second guide image that is different from the guide image may be obtained, and a third latent representation of the second guide image may be determined by the encoder model. A second combined latent representation may be generated based on the first latent representation and the third latent representation. A second intermediate output image comprising second inpainted image content for the region to be inpainted in the input image may be generated by the StyleGAN model based on the second combined latent representation. The second inpainted image content may be different from the inpainted image content of the intermediate output image. A second output image representing the input image with the region to be inpainted including the second inpainted image content from the second intermediate output image may be generated based on the input image, the indication of the region to be inpainted, and the second intermediate output image.

In some embodiments, the StyleGAN model may include one or more of (i) an adaptive instance normalization component (e.g., as implemented by StyleGAN1), (ii) a weight demodulation component (e.g., as implemented by StyleGAN2), or (iii) an alias-free architecture (e.g., as implemented by StyleGAN3).

In some embodiments, the indication of the region to be inpainted may include a mask.

VIII. Conclusion

The above detailed description describes various features and operations of the disclosed systems, devices, and methods with reference to the accompanying figures. In the figures, similar symbols typically identify similar components, unless context dictates otherwise.

With respect to any or all of the message flow diagrams, scenarios, and flow charts in the figures and as discussed herein, each step, block, and/or communication can represent a processing of information and/or a transmission of information in accordance with example embodiments.

A step or block that represents a processing of information may correspond to circuitry that can be configured to perform the specific logical functions of a herein-described method or technique. Alternatively or additionally, a block that represents a processing of information may correspond to a module, a segment, or a portion of program code (including related data). The program code may include one or more instructions executable by a processor for implementing specific logical operations or actions in the method or technique. The program code and/or related data may be stored on any type of computer readable medium such as a storage device including random access memory (RAM), a disk drive, a solid state drive, or another storage medium.

The computer readable medium may also include non-transitory computer readable media such as computer readable media that store data for short periods of time like register memory, processor cache, and RAM. The computer readable media may also include non-transitory computer readable media that store program code and/or data for longer periods of time. Thus, the computer readable media may include secondary or persistent long term storage, like read only memory (ROM), optical or magnetic disks, solid state drives, compact-disc read only memory (CD-ROM), for example. The computer readable media may also be any other volatile or non-volatile storage systems. A computer readable medium may be considered a computer readable storage medium, for example, or a tangible storage device.

Moreover, a step or block that represents one or more information transmissions may correspond to information transmissions between software and/or hardware modules in the same physical device. However, other information transmissions may be between software modules and/or hardware modules in different physical devices.

**Claims**

1. A computer-implemented method comprising:

   obtaining (i) an input image comprising a region to be inpainted, (ii) an indication of the region to be inpainted in the input image, and (iii) a guide image;
   determining, by an encoder model, (i) a first latent representation of the input image and (ii) a second latent representation of the guide image;
   generating a combined latent representation based on the first latent representation and the second latent representation;
   generating, by a style generative adversarial network (StyleGAN) model and based on the combined latent representation, an intermediate output image comprising inpainted image content for the region to be inpainted in the input image; and
   generating, based on the input image, the indication of the region to be inpainted, and the intermediate output image, an output image representing the input image with the region to be inpainted comprising the inpainted image content from the intermediate output image, wherein the StyleGAN model comprises a mapping network and a synthesis network, wherein the synthesis network comprises a plurality of style blocks,
   **characterized in that** the generating the intermediate output image comprises:

   generating, by the mapping network, an intermediate latent representation;
   determining a similarity metric indicative of a similarity between the input image and the guide image;
   generating, for a respective style block of the plurality of style blocks, an input similarity feature based on a comodulation of (i) an output of a preceding style block of the plurality of style blocks, (ii) the intermediate latent representation, and (iii) the first latent representation;
   generating, for the respective style block, a fused similarity feature based on a sum of (i) the input similarity feature and (ii) a product of the similarity metric and a comodulation of the input similarity feature and the second latent representation;
   generating, for the respective style block, an output similarity feature based on a convolution of (i) the input similarity feature and (ii) the fused similarity feature; and
   providing the output similarity feature as input to the respective style block.

2. The computer-implemented method of claim 1, wherein the StyleGAN model is configured to generate the inpainted image content to include a combination of visual features of the guide image and visual features of the input image.

3. The computer-implemented method of any of claims 1-2, wherein the first latent representation comprises a first feature vector, and wherein the second latent representation comprises a second feature vector.

4. The computer-implemented method of any of claims 1-3, wherein the first latent representation comprises a first feature map, and wherein the second latent representation comprises a second feature map.

5. The computer-implemented method of any of claims 1-4, wherein generating the combined latent representation comprises:

concatenating the first latent representation and the second latent representation.

6. The computer-implemented method of any of claims 1-4, wherein generating the combined latent representation comprises:
determining a first cross-attention between the first latent representation and the second latent representation.

7. The computer-implemented method of claims 1-6, wherein determining the similarity metric comprises one or more of:

determining a distance metric between the first latent representation and the second latent representation;
generating the similarity metric by a similarity model based on the input image, the guide image, and the indication of the region to be inpainted; or
comparing the input image to the guide image by weighting pixels of the input image according to a Gaussian distribution defined based on the indication of the region to be inpainted.

8. The computer-implemented method of any of claims 1-6, wherein generating the intermediate output image further comprises:

determining a second cross-attention between (i) an intermediate encoder state of the encoder model based on the guide image and (ii) an intermediate style block state of a corresponding style block of the plurality of style blocks, wherein a resolution of the intermediate encoder state matches a resolution of the intermediate style block state;
generating a concatenation of the second cross-attention and the intermediate latent representation; and
providing the concatenation as input to a subsequent style block of the plurality of style blocks.

9. The computer-implemented method of claim 8, wherein the intermediate style block state of the corresponding style block comprises an output of the corresponding style block.

10. The computer-implemented method of any of claims 1-9, wherein generating the output image comprises:
determining a sum of (i) a first product of the input image and an inverse of the indication of the region to be inpainted and (ii) a second product of the intermediate output image and the indication of the region to be inpainted.

11. The computer-implemented method of any of claims 1-10, wherein the StyleGAN model has been trained by a training process comprising:

obtaining (i) a training input image comprising a training region to be inpainted, (ii) a training indication of the region to be inpainted in the training input image, and (iii) a training guide image;
determining, by the encoder model, (i) a first training latent representation of the training input image and (ii) a second training latent representation of the training guide image;
generating a combined training latent representation based on the first training latent representation and the second training latent representation;
generating, by the StyleGAN model and based on the combined training latent representation, an intermediate training output image comprising inpainted training image content for the training region to be inpainted in the training input image;
determining, by a perceptual loss model, (i) a first perceptual feature representation of the training guide image and (ii) a second perceptual feature representation of the inpainted training image content;
determining a perceptual loss value based on a comparison of the first perceptual feature representation and the second perceptual feature representation; and
adjusting one or more parameters of the StyleGAN model based on the perceptual loss value, and optionally, wherein the training process further comprises:

generating, based on the training input image, the training indication of the region to be inpainted, and the intermediate training output image, a training output image representing the training input image with the region to be inpainted comprising the inpainted training image content from the intermediate training output image;
determining an adversarial loss value based on processing of the training output image by a discriminator model; and
adjusting the one or more parameters of the StyleGAN model further based on the adversarial loss value.

**12.** The computer-implemented method of claim 11, wherein the training process further comprises:

determining a training similarity metric indicative of a similarity between the training input image and the training guide image; and

determining the perceptual loss value by weighting the comparison of the first perceptual feature representation and the second perceptual feature representation according to the training similarity metric.

**13.** The computer-implemented method of any of claims 1-11, further comprising:

obtaining a second guide image that is different from the guide image;

determining, by the encoder model, a third latent representation of the second guide image;

generating a second combined latent representation based on the first latent representation and the third latent representation;

generating, by the StyleGAN model and based on the second combined latent representation, a second intermediate output image comprising second inpainted image content for the region to be inpainted in the input image, wherein the second inpainted image content is different from the inpainted image content of the intermediate output image; and

generating, based on the input image, the indication of the region to be inpainted, and the second intermediate output image, a second output image representing the input image with the region to be inpainted comprising the second inpainted image content from the second intermediate output image, and/or, wherein the StyleGAN model comprises one or more of (i) an adaptive instance normalization component, (ii) a weight demodulation component, or (iii) an alias-free architecture, and/or, wherein the indication of the region to be inpainted comprises a mask.

**14.** A system comprising:

a processor; and

a non-transitory computer-readable medium having stored thereon instructions that, when executed by the processor, cause the processor to perform operations in accordance with any of claims 1-13.

**15.** A non-transitory computer-readable medium having stored thereon instructions that, when executed by a computing device, cause the computing device to perform operations in accordance with any of claims 1-13.

**Patentansprüche**

**1.** Computerimplementiertes Verfahren, umfassend:

Erlangen (i) eines Eingabebildes, umfassend einen zu bearbeitenden Bereich, (ii) einer Angabe des zu bearbeitenden Bereichs in dem Eingabebild und (iii) eines Führungsbildes;

Bestimmen (i) einer ersten latenten Darstellung des Eingabebildes und (ii) einer zweiten latenten Darstellung des Führungsbildes durch ein Codierermodell;

Erzeugen einer kombinierten latenten Darstellung basierend auf der ersten latenten Darstellung und der zweiten latenten Darstellung;

Erzeugen eines Zwischenausgabebildes durch ein Style-Generative-Adversarial-Network-(StyleGAN)-Modell und basierend auf der kombinierten latenten Darstellung, umfassend einen bearbeiteten Bildinhalt für den zu bearbeitenden Bereich in dem Eingabebild; und

Erzeugen der Angabe des zu bearbeitenden Bereichs basierend auf dem Eingabebild und des Zwischenausgabebildes, eines Ausgabebildes, das das Eingabebild mit dem zu bearbeitenden Bereich darstellt, umfassend den bearbeiteten Bildinhalt aus dem Zwischenausgabebild, wobei das StyleGAN-Modell ein Abbildungsnetzwerk und ein Synthesenetzwerk umfasst, wobei das Synthesenetzwerk eine Vielzahl von Stilblöcken umfasst, **dadurch gekennzeichnet, dass** das Erzeugen des Zwischenausgabebildes Folgendes umfasst:

Erzeugen einer zwischenliegenden latenten Darstellung durch das Abbildungsnetzwerk;

Bestimmen einer Ähnlichkeitsmetrik, die eine Ähnlichkeit zwischen dem Eingabebild und dem Führungsbild angibt;

Erzeugen eines Eingabeähnlichkeitsmerkmals basierend auf einer Komodulation (i) einer Ausgabe eines vorhergehenden Stilblocks der Vielzahl von Stilblöcken, (ii) der zwischenliegenden latenten Darstellung und (iii) der ersten latenten Darstellung für einen jeweiligen Stilblock der Vielzahl von Stilblöcken;
Erzeugen eines fusionierten Ähnlichkeitsmerkmals basierend auf einer Summe (i) des Eingabeähnlichkeitsmerkmals und (ii) eines Produkts der Ähnlichkeitsmetrik und einer Komodulation des Eingabeähnlichkeitsmerkmals und der zweiten latenten Darstellung für den jeweiligen Stilblock;
Erzeugen eines Ausgabeähnlichkeitsmerkmals basierend auf einer Faltung (i) des Eingabeähnlichkeitsmerkmals und (ii) des fusionierten Ähnlichkeitsmerkmals für den jeweiligen Stilblock; und
Bereitstellen des Ausgabeähnlichkeitsmerkmals als Eingabe für den jeweiligen Stilblock.

2. Computerimplementiertes Verfahren nach Anspruch 1, wobei das StyleGAN-Modell dazu konfiguriert ist, den bearbeiteten Bildinhalt zu erzeugen, um eine Kombination aus visuellen Merkmalen des Führungsbildes und visuellen Merkmalen des Eingabebildes zu beinhalten.

3. Computerimplementiertes Verfahren nach einem der Ansprüche 1-2, wobei die erste latente Darstellung einen ersten Merkmalsvektor umfasst und wobei die zweite latente Darstellung einen zweiten Merkmalsvektor umfasst.

4. Computerimplementiertes Verfahren nach einem der Ansprüche 1-3, wobei die erste latente Darstellung eine erste Merkmalabbildung umfasst und wobei die zweite latente Darstellung eine zweite Merkmalabbildung umfasst.

5. Computerimplementiertes Verfahren nach einem der Ansprüche 1-4, wobei das Erzeugen der kombinierten latenten Darstellung Folgendes umfasst:
Verknüpfen der ersten latenten Darstellung mit der zweiten latenten Darstellung.

6. Computerimplementiertes Verfahren nach einem der Ansprüche 1-4, wobei das Erzeugen der kombinierten latenten Darstellung Folgendes umfasst:
Bestimmen einer ersten Kreuzaufmerksamkeit zwischen der ersten latenten Darstellung und der zweiten latenten Darstellung.

7. Computerimplementiertes Verfahren nach Anspruch 1-6, wobei das Bestimmen der Ähnlichkeitsmetrik eines oder mehrere von Folgendem umfasst:

Bestimmen einer Distanzmetrik zwischen der ersten latenten Darstellung und der zweiten latenten Darstellung;
Erzeugen der Ähnlichkeitsmetrik durch ein Ähnlichkeitsmodell basierend auf dem Eingabebild, dem Führungsbild und der Angabe des zu bearbeitenden Bereichs; oder
Vergleichen des Eingabebildes mit dem Führungsbild durch Gewichten der Pixel des Eingabebildes nach einer Gaußschen Verteilung, die basierend auf der Angabe des zu bearbeitenden Bereichs definiert wird.

8. Computerimplementiertes Verfahren nach einem der Ansprüche 1-6, wobei das Erzeugen des Zwischenausgabebildes ferner Folgendes umfasst:

Bestimmen einer zweiten Kreuzaufmerksamkeit zwischen (i) einem Zwischencodiererzustand des Codierermodells basierend auf dem Führungsbild und (ii) einem Zwischenstilblockzustand eines entsprechenden Stilblocks der Vielzahl von Stilblöcken, wobei eine Auflösung des Zwischencodiererzustands mit einer Auflösung des Zwischenstilblockzustands übereinstimmt;
Erzeugen einer Verknüpfung der zweiten Kreuzaufmerksamkeit und der zwischenliegenden latenten Darstellung; und
Bereitstellen der Verknüpfung als Eingabe für einen nachfolgenden Stilblock der Vielzahl von Stilblöcken.

9. Computerimplementiertes Verfahren nach Anspruch 8, wobei der Zwischenstilblockzustand des entsprechenden Stilblocks eine Ausgabe des entsprechenden Stilblocks umfasst.

10. Computerimplementiertes Verfahren nach einem der Ansprüche 1-9, wobei das Erzeugen des Ausgabebildes Folgendes umfasst:
Bestimmen einer Summe (i) eines ersten Produkts des Eingabebildes und einer Inversen der Angabe des zu bearbeitenden Bereichs und (ii) eines zweiten Produkts der Zwischenausgabe und der Angabe des zu bearbeitenden Bereichs.

11. Computerimplementiertes Verfahren nach einem der Ansprüche 1-10, wobei das StyleGAN-Modell durch einen Trainingsprozess trainiert wurde, umfassend:

Erlangen (i) eines Trainingseingabebildes, umfassend einen zu bearbeitenden Trainingsbereich, (ii) eine Trainingsangabe des zu bearbeitenden Bereichs in dem Trainingseingabebild und (iii) ein Trainingsführungsbild;

Bestimmen (i) einer ersten trainingslatenten Darstellung des Trainingseingabebildes und (ii) einer zweiten trainingslatenten Darstellung des Trainingsführungsbildes durch das Codierermodell;

Erzeugen einer kombinierten trainingslatenten Darstellung basierend auf der ersten trainingslatenten Darstellung und der zweiten trainingslatenten Darstellung;

Erzeugen eines Zwischentrainingsausgabebildes durch das StyleGAN-Modell und basierend auf der kombinierten trainingslatenten Darstellung, umfassend einen bearbeiteten Trainingsbildinhalt für den zu bearbeitenden Trainingsbereich in dem Trainingseingabebild;

Bestimmen (i) einer ersten Wahrnehmungsmerkmaldarstellung eines des Trainingsführungsbildes und (ii) einer zweiten Wahrnehmungsmerkmaldarstellung eines des bearbeiteten Trainingsbildinhalts durch ein Wahrnehmungsverlustmodell;

Bestimmen eines Verlustwerts basierend auf einem Vergleich der ersten Wahrnehmungsmerkmaldarstellung und der zweiten Wahrnehmungsmerkmaldarstellung; und

Anpassen eines oder mehrerer Parameter des StyleGAN-Modells basierend auf dem Wahrnehmungsverlustwert, und optional wobei der Trainingsprozess ferner Folgendes umfasst:

Erzeugen der Trainingsangabe des zu bearbeitenden Bereichs und des Zwischentrainingsausgabebildes, basierend auf dem Trainingseingabebild, wobei ein Trainingsausgabebild das Trainingseingabebild mit dem zu bearbeitenden Bereich darstellt, umfassend den bearbeiteten Trainingsbildinhalt aus dem Zwischentrainingsausgabebild;

Bestimmen eines gegnerischen Verlustwerts basierend auf Verarbeiten des Trainingsausgabebildes durch ein Diskriminatormodell; und

Anpassen des einen oder der mehreren Parameter des StyleGAN-Modells ferner basierend auf dem gegnerischen Verlustwert.

**12.** Computerimplementierte Verfahren nach Anspruch 11, wobei der Trainingsprozess ferner Folgendes umfasst:

Bestimmen einer Trainingsähnlichkeitsmetrik, die eine Ähnlichkeit zwischen dem Trainingseingabebild und dem Trainingsführungsbild angibt; und

Bestimmen des Wahrnehmungsverlustwerts durch das Gewichten des Vergleichs der ersten Wahrnehmungsmerkmaldarstellung und der zweiten Wahrnehmungsmerkmaldarstellung gemäß der Trainingsähnlichkeitsmetrik.

**13.** Computerimplementiertes Verfahren nach einem der Ansprüche 1-11, ferner umfassend:

Erlangen eines zweiten Führungsbildes, das sich von dem Führungsbild unterscheidet;

Bestimmen einer dritten latenten Darstellung des zweiten Führungsbildes durch das Codierermodell;

Erzeugen einer zweiten kombinierten latenten Darstellung basierend auf der ersten latenten Darstellung und der dritten latenten Darstellung;

Erzeugen eines zweiten Zwischenausgabebildes, umfassend einen zweiten bearbeiteten Bildinhalt für den zu bearbeitenden Bereich in dem Eingabebild, durch das StyleGAN-Modell und basierend auf der zweiten kombinierten latenten Darstellung, wobei sich der zweite bearbeitetet Bildinhalt von dem bearbeiteten Bildinhalt des Zwischenausgabebildes unterscheidet; und

Erzeugen der Angabe des zu bearbeitenden Bereichs und des zweiten Zwischenausgabebildes, eines zweiten Zwischenausgabebildes, das das Eingabebild mit dem zu bearbeitenden Bereich darstellt, umfassend den zweiten bearbeiteten Bildinhalt aus dem zweiten Zwischenausgabebild, basierend auf dem Eingabebild, und/oder wobei das StyleGAN-Modell eine oder mehrere von (i) einer adaptiven Instanz-Normalisierungskomponente, (ii) einer Gewichtsdemodulationskomponente oder (iii) einer aliasfreien Architektur umfasst, und/oder wobei die Angabe des zu unlackierenden Bereichs eine Maske umfasst.

**14.** System, umfassend:

einen Prozessor; und

ein nichttransitorisches computerlesbares Medium, auf dem Anweisungen gespeichert sind, die, wenn sie durch den Prozessor ausgeführt werden, den Prozessor veranlassen, Vorgänge nach einem der Ansprüche 1-13 durchzuführen.

**15.** Nichttransitorisches computerlesbares Medium, auf dem Anweisungen gespeichert sind, die, wenn sie durch eine Rechenvorrichtung ausgeführt werden, die Rechenvorrichtung veranlassen, Vorgänge nach einem der Ansprüche 1-13 durchzuführen.

**Revendications**

**1.** Procédé mis en œuvre par ordinateur comprenant :

l'obtention (i) d'une image d'entrée comprenant une région à retoucher, (ii) une indication de la région à retoucher dans l'image d'entrée, et (iii) une image de guidage ;
la détermination, par un modèle de codeur, (i) d'une première représentation latente de l'image d'entrée et (ii) d'une deuxième représentation latente de l'image de guidage ;
la génération d'une représentation latente combinée sur la base de la première représentation latente et de la deuxième représentation latente ;
la génération, par un modèle de réseau antagoniste génératif de style (StyleGAN) et sur la base de la représentation latente combinée, d'une image de sortie intermédiaire comprenant un contenu d'image retouché pour la région à retoucher dans l'image d'entrée ; et
la génération, sur la base de l'image d'entrée, de l'indication de la région à retoucher et de l'image de sortie intermédiaire, d'une image de sortie représentant l'image d'entrée avec la région à retoucher comprenant le contenu d'image retouché à partir de l'image de sortie intermédiaire, dans lequel le modèle StyleGAN comprend un réseau de mappage et un réseau de synthèse, dans lequel le réseau de synthèse comprend une pluralité de blocs de style, **caractérisé en ce que** la génération de l'image de sortie intermédiaire comprend :

la génération, par le réseau de mappage, d'une représentation latente intermédiaire ;
la détermination d'une métrique de similarité indicative d'une similarité entre l'image d'entrée et l'image de guidage ;
la génération, pour un bloc de style respectif de la pluralité de blocs de style, d'une caractéristique de similarité d'entrée sur la base d'une comodulation (i) d'une sortie d'un bloc de style précédent de la pluralité de blocs de style, (ii) de la représentation latente intermédiaire, et (iii) de la première représentation latente ;
la génération, pour le bloc de style respectif, d'une caractéristique de similarité fusionnée basée sur une somme (i) de la caractéristique de similarité d'entrée et (ii) d'un produit de la métrique de similarité et d'une comodulation de la caractéristique de similarité d'entrée et de la deuxième représentation latente ;
la génération, pour le bloc de style respectif, d'une caractéristique de similarité de sortie sur la base d'une convolution (i) de la caractéristique de similarité d'entrée et (ii) de la caractéristique de similarité fusionnée ; et
la fourniture de la caractéristique de similarité de sortie comme entrée au bloc de style respectif.

**2.** Procédé mis en œuvre par ordinateur selon la revendication 1, dans lequel le modèle StyleGAN est configuré pour générer le contenu d'image retouché pour comporter une combinaison de caractéristiques visuelles de l'image de guidage et de caractéristiques visuelles de l'image d'entrée.

**3.** Procédé mis en œuvre par ordinateur selon l'une quelconque des revendications 1 à 2, dans lequel la première représentation latente comprend un premier vecteur de caractéristiques, et dans lequel la deuxième représentation latente comprend un second vecteur de caractéristiques.

**4.** Procédé mis en œuvre par ordinateur selon l'une quelconque des revendications 1 à 3, dans lequel la première représentation latente comprend une première carte de caractéristiques, et dans lequel la deuxième représentation latente comprend une seconde carte de caractéristiques.

**5.** Procédé mis en œuvre par ordinateur selon l'une quelconque des revendications 1 à 4, dans lequel la génération de la représentation latente combinée comprend :
la concaténation de la première représentation latente et de la deuxième représentation latente.

**6.** Procédé mis en œuvre par ordinateur selon l'une quelconque des revendications 1 à 4, dans lequel la génération de la représentation latente combinée comprend :
la détermination d'une première attention croisée entre la première représentation latente et la deuxième représentation latente.

7. Procédé mis en œuvre par ordinateur selon les revendications 1 à 6, dans lequel la détermination de la métrique de similarité comprend l'une :

   de la détermination d'une métrique de distance entre la première représentation latente et la deuxième représentation latente ;

   de la génération de la métrique de similarité par un modèle de similarité sur la base de l'image d'entrée, l'image de guidage et l'indication de la région à retoucher ; ou

   de la comparaison de l'image d'entrée à l'image de guidage en pondérant des pixels de l'image d'entrée selon une distribution gaussienne définie sur la base de l'indication de la région à retoucher.

8. Procédé mis en œuvre par ordinateur selon l'une quelconque des revendications 1 à 6, dans lequel la génération de l'image de sortie intermédiaire comprend également :

   la détermination d'une seconde attention croisée entre (i) un état de codeur intermédiaire du modèle de codeur sur la base de l'image de guidage et (ii) un état de bloc de style intermédiaire d'un bloc de style correspondant de la pluralité de blocs de style, dans lequel une résolution de l'état de codeur intermédiaire correspond à une résolution de l'état de bloc de style intermédiaire ;

   la génération d'une concaténation de la seconde attention croisée et de la représentation latente intermédiaire ; et

   la fourniture de la concaténation comme entrée à un bloc de style ultérieur de la pluralité de blocs de style.

9. Procédé mis en œuvre par ordinateur selon la revendication 8, dans lequel l'état de bloc de style intermédiaire du bloc de style correspondant comprend une sortie du bloc de style correspondant.

10. Procédé mis en œuvre par ordinateur selon l'une quelconque des revendications 1 à 9, dans lequel la génération de l'image de sortie comprend :
    la détermination d'une somme (i) d'un premier produit de l'image d'entrée et d'un inverse de l'indication de la région à retoucher et (ii) d'un second produit de l'image de sortie intermédiaire et de l'indication de la région à retoucher.

11. Procédé mis en œuvre par ordinateur selon l'une quelconque des revendications 1 à 10, dans lequel le modèle StyleGAN a été entraîné par un processus d'entraînement comprenant :

    l'obtention (i) d'une image d'entrée d'entraînement comprenant une région d'entraînement à retoucher, (ii) une indication d'entraînement de la région à retoucher dans l'image d'entrée d'entraînement, et (iii) d'une image de guidage d'entraînement ;

    la détermination, par le modèle de codeur, (i) d'une première représentation latente d'entraînement de l'image d'entrée d'entraînement et (ii) d'une deuxième représentation latente d'entraînement de l'image de guidage d'entraînement ;

    la génération d'une représentation latente d'entraînement combinée sur la base de la première représentation latente d'entraînement et de la deuxième représentation latente d'entraînement ;

    la génération, par le modèle StyleGAN et sur la base de la représentation latente d'entraînement combinée, d'une image de sortie d'entraînement intermédiaire comprenant un contenu d'image d'entraînement retouché pour la région d'entraînement à retoucher dans l'image d'entrée d'entraînement ;

    la détermination, par un modèle de perte perceptuelle, (i) d'une première représentation de caractéristique perceptuelle de l'image de guidage d'entraînement et (ii) d'une seconde représentation de caractéristique perceptuelle du contenu d'image d'entraînement retouché ;

    la détermination d'une valeur de perte perceptuelle sur la base d'une comparaison de la première représentation de caractéristique perceptuelle et de la seconde représentation de caractéristique perceptuelle ; et

    le réglage d'un ou de plusieurs paramètres du modèle StyleGAN sur la base de la valeur de perte perceptuelle, et éventuellement, dans lequel le processus d'entraînement comprend également :

       la génération, sur la base de l'image d'entrée d'entraînement, de l'indication d'entraînement de la région à retoucher et de l'image de sortie d'entraînement intermédiaire, d'une image de sortie d'entraînement représentant l'image d'entrée d'entraînement avec la région à retoucher comprenant le contenu d'image d'entraînement retouché à partir de l'image de sortie d'entraînement intermédiaire ;

       la détermination d'une valeur de perte antagoniste sur la base du traitement de l'image de sortie d'entraînement par un modèle discriminateur ; et

       le réglage davantage des un ou plusieurs paramètres du modèle StyleGAN sur la base de la valeur de perte antagoniste.

**12.** Procédé mis en œuvre par ordinateur selon la revendication 11, dans lequel le processus d'entraînement comprend également :

la détermination d'une métrique de similarité d'entraînement indicative d'une similarité entre l'image d'entrée d'entraînement et l'image de guidage d'entraînement ; et

la détermination de la valeur de perte perceptuelle en pondérant la comparaison de la première représentation de caractéristique perceptuelle et de la seconde représentation de caractéristique perceptuelle sur la base de la métrique de similarité d'entraînement.

**13.** Procédé mis en œuvre par ordinateur selon l'une quelconque des revendications 1 à 11, comprenant également :

l'obtention d'une seconde image de guidage qui est différente de l'image de guidage ;

la détermination, par le modèle de codeur, d'une troisième représentation latente de la seconde image de guidage ;

la génération d'une deuxième représentation latente combinée sur la base de la première représentation latente et de la troisième représentation latente ;

la génération, par le modèle StyleGAN et sur la base de la deuxième représentation latente combinée, d'une seconde image de sortie intermédiaire comprenant un second contenu d'image retouché pour la région à retoucher dans l'image d'entrée, dans lequel le second contenu d'image retouché est différent du contenu d'image retouché de l'image de sortie intermédiaire ; et

la génération, sur la base de l'image d'entrée, de l'indication de la région à retoucher et de la seconde image de sortie intermédiaire, d'une seconde image de sortie représentant l'image d'entrée avec la région à retoucher comprenant le second contenu d'image retouché à partir de la seconde image de sortie intermédiaire, et/ou, dans lequel le modèle StyleGAN comprend l'un ou plusieurs (i) d'un composant de normalisation d'instance adaptative, (ii) d'un composant de démodulation de poids, ou (iii) d'une architecture sans crénelage, et/ou, dans lequel l'indication de la région à retoucher comprend un masque.

**14.** Système comprenant :

un processeur ; et

un support non transitoire lisible par ordinateur sur lequel sont stockées des instructions qui, lorsqu'elles sont exécutées par le processeur, amènent le processeur à réaliser des opérations selon l'une quelconque des revendications 1 à 13.

**15.** Support non transitoire lisible par ordinateur sur lequel sont stockées des instructions qui, lorsqu'elles sont exécutées par un dispositif informatique, amènent le dispositif informatique à réaliser des opérations selon l'une quelconque des revendications 1 à 13.

FRONT VIEW        RIGHT SIDE VIEW        BACK VIEW

# Figure 1

**Figure 2**

GUIDE IMAGE 304

INPUT IMAGE 302

INPAINTING MASK
306

ENCODER
MODEL 310

ENCODER
MODEL 320

LATENT
REPRESENTATION
312

LATENT
REPRESENTATION
322

338

LATENT REPRESENTATION OPERATOR 314

COMBINED LATENT REPRESENTATION 316

STYLEGAN
MODEL 330

INTERMEDIATE
OUTPUT IMAGE 332

OUTPUT IMAGE
GENERATOR 334

INPAINTING
SYSTEM 300

OUTPUT IMAGE 336

Figure 3

Figure 4A

STYLEGAN MODEL 330A

COMBINED LATENT REPRESENTATION 316

NOISE INPUT 400

MAPPING NETWORK 402

INTERMEDIATE LATENT REPRESENTATION 404

406

COMBINED INTERMEDIATE LATENT REPRESENTATION 408

INITIALIZATION MAPPING 410

INITIALIZATION VALUES 412

NOISE INPUT 414

SYNTHESIS NETWORK 420

STYLE BLOCK 422

STYLE BLOCK 424

STYLE BLOCK 426

INTERMEDIATE OUTPUT IMAGE 332

EP 4 248 397 B1

26

**Figure 4B**

**Figure 4C**

**Figure 5**

Figure 6

OBTAIN (I) AN INPUT IMAGE COMPRISING A REGION TO BE INPAINTED, (II) AN INDICATION OF THE REGION TO BE INPAINTED IN THE INPUT IMAGE, AND (III) A GUIDE IMAGE ⟵ 700

DETERMINE, BY AN ENCODER MODEL, (I) A FIRST LATENT REPRESENTATION OF THE INPUT IMAGE AND (II) A SECOND LATENT REPRESENTATION OF THE GUIDE IMAGE ⟵ 702

GENERATE A COMBINED LATENT REPRESENTATION BASED ON THE FIRST LATENT REPRESENTATION AND THE SECOND LATENT REPRESENTATION ⟵ 704

GENERATE, BY A STYLE GENERATIVE ADVERSARIAL NETWORK (STYLEGAN) MODEL AND BASED ON THE COMBINED LATENT REPRESENTATION, AN INTERMEDIATE OUTPUT IMAGE COMPRISING INPAINTED IMAGE CONTENT FOR THE REGION TO BE INPAINTED IN THE INPUT IMAGE ⟵ 706

GENERATE, BASED ON THE INPUT IMAGE, THE INDICATION OF THE REGION TO BE INPAINTED, AND THE INTERMEDIATE OUTPUT IMAGE, AN OUTPUT IMAGE REPRESENTING THE INPUT IMAGE WITH THE REGION TO BE INPAINTED COMPRISING THE INPAINTED IMAGE CONTENT FROM THE INTERMEDIATE OUTPUT IMAGE ⟵ 708

# Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI JIA et al.** *FaceInpainter: High Fidelity Face Adaptation to Heterogeneous Domains*
- **NGO LE MINH et al.** *Unified Application of Style Transfer for Face Swapping and Reenactment*
- **KARRAS et al.** Analyzing and Improving the Image Quality of StyleGAN. *arXiv:1912.04958*
- **KARRAS et al.** Alias-Free Generative Adversarial Networks. *arXiv:2106.12423*